# EUROPÄISCHE PATENTSCHRIFT

(11) **EP 3 079 957 B1**
(45) Veröffentlichungstag und Bekanntmachung des Hinweises auf die Patenterteilung: **30.10.2019**
(21) Anmeldenummer: 14749847.1
(22) Anmeldetag: 11.08.2014
(51) Int. Cl.: B60T 8/1755

(54) **VERFAHREN ZUR REGELUNG DER FAHRSTABILITÄT**
METHOD FOR REGULATING DRIVING STABILITY
PROCÉDÉ PERMETTANT DE RÉGLER LA STABILITÉ DE CONDUITE

(30) Priorität: 13.12.2013 DE 102013225970
(43) Veröffentlichungstag der Anmeldung: 19.10.2016
(73) Patentinhaber: Continental Teves AG & Co. OHG, 60488 Frankfurt am Main (DE)
(72) Erfinder: BRETZIGHEIMER, Kai, 55128 Mainz (DE); SEURER, Frank, 61118 Bad Vilbel (DE)
(86) Internationale Anmeldenummer: PCT/EP2014/067152
(87) Internationale Veröffentlichungsnummer: WO 2015/086167

(56) Entgegenhaltungen:
- DE-A1- 10 222 231
- DE-A1-102011 080 789
- US-B1- 6 273 529

## Beschreibung

Die Erfindung betrifft ein Verfahren gemäß Oberbegriff von Anspruch 1 und ein elektronisches Steuergerät gemäß Oberbegriff von Anspruch 10.

Neben elektronisch geregelten Bremssystemen, welche Funktionen wie eine Bremsschlupfregelung (ABS), die das Blockieren der Räder während einer Vollbremsung verhindert, und eine Fahrdynamikregelung (ESC) bereitstellen, welche in dynamischen Fahrmanövern durch gezielte Bremseingriffe stabilisierend auf das Kraftfahrzeug einwirkt, besitzen Kraftfahrzeuge in zunehmendem Maße eine Umfeldsensorik, womit andere Verkehrsteilnehmer und unbewegliche Hindernisse erfasst und deren Positionen bzw. Geschwindigkeiten gegenüber dem eigenen Fahrzeug bestimmt werden können.

Die Vernetzung der Umfeldsensorik mit einem elektronisch geregelten Bremssystem ermöglicht eine Abstandsregelung zum vorausfahrenden Kraftfahrzeug (ACC), eine Warnung des Fahrers beim Auftreten besonders kritischer Situationen, und eine automatische Einleitung einer Notbremsung, wenn eine Kollision droht. Um Fehleingriffe zu vermeiden, darf ein solcher Notbremsassistent (EBA) erst spät, d.h. in möglichst geringem Abstand zum Hindernis eingreifen, wodurch in manchen Situationen trotz dieser Fahrerassistenz ein Zusammenstoß mit dem Hindernis bzw. dem anderen Verkehrsteilnehmer durch alleiniges Abbremsen nur abgeschwächt und nicht vermieden werden kann.

Dafür gibt es verschiedene Gründe:
- Das Einhalten eines idealen Abstands zum vorausfahrenden Fahrzeug ist in dichtem Verkehr nicht praktikabel.
- Ein erheblich langsameres Fahrzeug schert von einer Nachbarfahrspur ein.
- Ein entgegenkommendes Fahrzeug wird zu Beginn eines Überholmanövers übersehen.
- Die Abstandsberechnung des Fahrerassistenzsystems setzt den Reibwert einer ebenen und trockenen Fahrbahn voraus, womit der Bremsweg auf glatter Fahrbahn länger als der Abstand zum Eingriffszeitpunkt ist.

Um einen Zusammenstoß zu verhindern, entscheiden sich viele Fahrer für ein ungebremstes oder gebremstes Ausweichmanöver. Die intuitive Lenkeingabe kann bei Normalfahrern, die Notausweichsituationen nur selten erleben, zu dynamisch sein und insbesondere beim anschließenden Zurücklenken zu heftigen Fahrzeugreaktionen führen.

Aus der gattungsbildenden DE 10 2011 080 789 A1 ist ein Verfahren bekannt, bei dem das Fahrverhalten eines Fahrzeugs in Abhängigkeit von Umgebungsdaten beeinflusst wird, um ein Ausweichmanöver zu unterstützen, sobald eine Kollisionsgefahr anhand der Daten von einem oder mehreren Umfeldsensoren, insbesondere Radarsensoren und/oder Kameras, und der Daten von einem oder mehreren Fahrzeugsensoren, insbesondere Lenkwinkelsensor und/oder Gierratensensor und/oder Raddrehzahlsensoren, erkannt wird, wobei das Fahrzeug ein elektronisch geregeltes Bremssystem aufweist, welches einen fahrerunabhängigen Aufbau und eine Modulation der Bremskräfte an den einzelnen Rädern des Fahrzeugs ermöglicht. Bei erkannter Kollisionsgefahr wird in einer ersten Phase ein Einlenken des Fahrers unterstützt und/oder in einer zweiten Phase ein Lenken des Fahrers gedämpft.

Aufgabe der vorliegenden Erfindung ist es, die Unterstützung des Fahrers bei einem Ausweichvorgang hinsichtlich Beherrschbarkeit durch den Fahrer und Fahrstabilität weiter zu verbessern.

Diese Aufgabe wird durch ein Verfahren gemäß Anspruch 1 gelöst.

Es wird also ein Verfahren bereitgestellt, bei dem das Fahrverhalten eines Fahrzeugs mit einem elektronisch geregelten Bremssystem in Abhängigkeit von Umgebungsdaten beeinflusst wird, um ein Ausweichmanöver zu unterstützen, sobald eine Kollisionsgefahr anhand der Daten von Umfeldsensoren und Fahrzeugsensoren erkannt wird, wobei bei erkannter Kollisionsgefahr mittels eines fahrerunabhängigen Bremseingriffs, also einem fahrerunabhängigen Aufbau und/oder einer Modulation der Bremskräfte an den einzelnen Rädern, ein Einlenken des Fahrers unterstützt wird. Erfindungsgemäß wird ein Bremsschlupf an mindestens einem Rad des Fahrzeugs in einer ersten Phase des Ausweichmanövers auf einen ersten Schlupfschwellenwert begrenzt und in einer zweiten Phase des Ausweichmanövers auf einen zweiten Schlupfschwellenwert begrenzt, wobei der erste Schlupfschwellenwert kleiner ist als der zweite Schlupfschwellenwert.

Die Erfindung basiert auf der Überlegung, dass moderne Fahrzeuge vielfach eine Fahrdynamikregelung (ESC) aufweisen, welche beispielsweise durch einen fahrerunabhängigen Aufbau von Bremskraft an einem Eingriffsrad ein zusätzliches Giermoment erzeugen kann, um das gemessene Ist-Verhalten des Fahrzeugs dem anhand zumindest des eingestellten Lenkwinkels ermittelten Soll-Verhalten anzupassen. Prinzipiell unabhängig von bzw. unterlagert zu der Fahrdynamikregelung findet auch eine Bremsschlupfregelung statt, bei der die Radgeschwindigkeiten der einzelnen Räder gemessenen und mit einer Referenzgeschwindigkeit verglichen werden. Wenn der Schlupf bzw. die Differenz zwischen Radgeschwindigkeit und Referenzgeschwindigkeit eines Rads über einen vorgegebenen Schwellenwert ansteigt, so wird die Bremskraft an diesem Rad verringert. Nach dem Stand der Technik wird bei einer Bremsschlupfregelung der Schwellenwert so gewählt, dass ein möglichst kurzer Bremsweg resultiert.

Indem bei erkannter Kollisionsgefahr, welche ein Ausweichen erforderlich macht, die Bremsschlupfregelung anhand eines ersten Schlupfschwellenwerts erfolgt, welcher vorzugsweise im Bereich von 10 % - 20 % liegt, kann ein Abbau der durch den Reifen übertragbaren Querkräfte vermieden werden. Somit folgt das Fahrzeug in einer ersten Phase auch auf Nässe oder Schnee beim Lenken in die Ausweichgasse der Vorgabe des Fahrers direkt und ungedämpft.

Dadurch, dass in einer zweiten Phase die Bremsschlupfregelung anhand eines zweiten Schlupfschwellenwerts erfolgt, welcher vorzugsweise im Bereich von 30% - 50% liegt, werden in dieser Phase des Ausweichmanövers die übertragbaren Querkräfte begrenzt. Somit wird ein "Verreißen" des Fahrzeugs verhindert, bei dem das Gieren zum Ausscheren übermäßig schnell zum Gieren in die Ausweichgasse wechselt, wobei hohe Gierbeschleunigungen auftreten. Dies könnte sonst zu einem

Übersteuern und Querstehen oder sogar einem Umkippen des Fahrzeugs führen. Ein weiterer Vorteil besteht darin, dass ein aufgrund der verringerten Querkräfte tendenziell untersteuerndes Fahrzeug beim Wiedereinscheren in die Ausweichgasse weniger Platz benötigt als ein übersteuerndes Fahrzeug bzw. eine schmalere Ausweichgasse ausreichend ist. Zweckmäßigerweise beginnt die erste Phase des Ausweichmanövers bei erkannter Kollisionsgefahr, wobei die erste Phase insbesondere erst nach Erkennung eines Einlenkens des Fahrers beginnt. Somit kann die übliche Antiblockier- bzw. Bremsschlupfregelung mit einer auf Kosten der Querkräfte optimierten Übertragung von Längskräften im Sinne einer weitgehenden Abbremsung des Fahrzeugs möglichst lange beibehalten werden.

Erfindungsgemäß beginnt die zweite Phase erst dann, so-bald der Fahrer entgegen der Ausweichrichtung lenkt, wobei die zweite Phase vorzugsweise erst dann beginnt, wenn eine gemessene Lenkwinkelgeschwindigkeit und/oder eine gemessene Gierbeschleunigung einen vorgegebenen Schleuderschwellenwert überschreitet. Wenn der Fahrer zurücklenkt, ein für das Ausweichen um das Hindernis ausreichender Querversatz also erreicht wurde, ist es zweckmäßig, die übertragbaren Querkräfte insbesondere an der Vorderachse durch Einregeln eines hohen Bremsschlupfs zu begrenzen. Neben einer Verkürzung des Bremswegs in den Stillstand verhindert dies einen Aufbau übermäßiger Querkräfte, die die Fahrstabilität gefährden und zu einem Umkippen des Fahrzeugs führen könnten. Es kann auch vorgesehen sein, diesen Querkraftabbau dann oder nur dann vorzunehmen, wenn anhand einer schnellen Lenkbewegung eine besonders hohe Gefahr für die Fahrstabilität herrscht. Lenkt der Fahrer kontrolliert, so folgt das Fahrzeug seinen Vorgaben weiterhin direkt und ungedämpft.

Bevorzugt erfolgt in der ersten Phase ein fahrerunabhängiger Aufbau von Bremskraft an einem oder mehreren kurveninneren Rädern des Fahrzeugs, um ein Giermoment in Ausweichrichtung zu erzeugen, wobei zumindest der Bremschlupf an dem Eingriffsrad oder den Eingriffsrädern begrenzt wird. Dadurch, dass ein Lenken des Fahrers ohne Abbau von Querkräften unterstützt wird, kann sehr schnell ein für das Ausweichen hinreichender Querversatz erzielt werden.

Vorzugsweise erfolgt in der zweiten Phase ein fahrerunabhängiger Aufbau von Bremskraft an einem oder mehreren kurvenäußeren Rädern des Fahrzeugs, um die Gierbeschleunigung zu begrenzen, wobei zumindest der Bremschlupf an dem Eingriffsrad oder den Eingriffsrädern begrenzt wird. Wenn der Fahrer beim Rücklenken eine heftige Lenkbewegung macht, kann es sinnvollerweise vorgesehen sein, die aufgebaute Gierbeschleunigung durch aktive Bremseingriffe zu begrenzen.

Es ist zweckmäßig, wenn ein fahrerunabhängige Aufbau und/oder Abbau von Bremskraft nach Maßgabe einer Sollgierrate erfolgt, welche insbesondere anhand einer berechneten Ausweichtrajektorie bestimmt wird. Indem in dieser Variante eine optimale Ausweichtrajektorie berechnet wird, kann eine Regelung der Gierrate um die durch die Ausweichtrajektorie vorgegebene Sollgierrate erfolgen. Der nötige Querversatz kann in vielen Fällen ohne eine Gefährdung der Fahrstabilität durch hohe auftretende Querkräfte erfolgen.

Vorteilhafterweise wird der zweite Schlupfschwellenwert nach Maßgabe einer gemessenen Gierbeschleunigung und/oder einer gemessenen Lenkwinkelgeschwindigkeit festgelegt. Wird eine hektische Lenkbewegung des Fahrers erkannt, so kann diese durch eine Regelschwelle des Bremsschlupfs und einen entsprechenden Querkraftabbau stark gedämpft werden.

Gemäß einer bevorzugten Ausführungsform der Erfindung erfolgt bei erkannter Annäherung an ein Hindernis zunächst ein fahrerunabhängiger Bremseingriff an allen Rädern des Fahrzeugs, um die Fahrgeschwindigkeit zu verringern, wobei insbesondere eine Kollisionsgefahr erst dann erkannt wird, wenn eine Kollision allein durch Bremsen nicht mehr verhindert werden kann. Solange eine Verzögerung des Fahrzeugs ohne Verlassen der Spur zum Verhindern einer Kollision ausreichen könnte, erfolgt in dieser Ausführungsform ein fahrerunabhängiger Bremseingriff wie bei einem reinen Notbremsassistenten.

Gemäß einer besonders bevorzugten Ausführungsform der Erfindung wird bei erkannter Annäherung an ein Hindernis der Bremsschlupf an allen Rädern des Fahrzeugs auf einen dritten Schlupfschwellenwert begrenzt, welcher größer als oder gleich wie der zweite Schlupfschwellenwert ist. Kann die Kollision durch Abbremsen des Fahrzeugs in den Stand prinzipiell verhindert oder zumindest abgeschwächt werden, so wird bis zu einem erkannten Einlenken des Fahrers die maximale Längsverzögerung gewährleistet.

Die Erfindung betrifft weiterhin ein elektronisches Steuergerät, insbesondere ein elektronisches Bremsensteuergerät, welches Informationen eines oder mehrerer Umfeldsensoren, insbesondere Radarsensoren und/oder Kameras, empfängt und mit einem oder mehreren Fahrzeugsensoren, insbesondere Lenkwinkelsensor und/oder Gierratensensor und/oder Raddrehzahlsensoren, verbunden ist, und welches durch eine Ansteuerung von Aktuatoren einen fahrerunabhängigen Aufbau und eine Modulation der Bremskräfte an den einzelnen Rädern des Fahrzeugs bewirken kann. Erfindungsgemäß wird von dem Steuergerät ein Verfahren nach mindestens einem der vorhergehenden Ansprüche durchgeführt wird.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: ein zur Durchführung des Verfahrens geeignetes Kraftfahrzeug, und
- Fig. 2: eine schematische Darstellung eines Ausweichvorgangs.

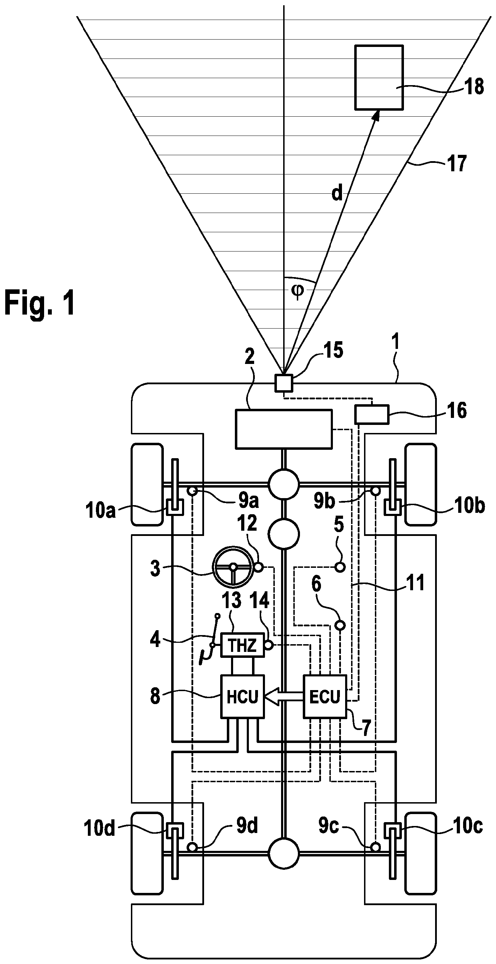

Figur 1 zeigt eine schematische Darstellung eines Kraftfahrzeugs 1, welches zur Durchführung des erfindungsgemäßen Verfahrens geeignet ist. Es weist einen Antriebsmotor 2, der zumindest einen Teil der Räder des Fahrzeugs antreibt, ein Lenkrad 3, ein Bremspedal 4, welches mit einem Tandemhauptzylinder (THZ) 13 verbunden ist, und vier individuell ansteuerbare Radbremsen 10a-10d auf. Das erfindungsgemäße Verfahren ist auch durchführbar, wenn nur ein Teil der Fahrzeugräder angetrieben wird. Neben oder alternativ zu hydraulischen Reibbremsen können auch an einem, mehreren oder allen Rädern elektromechanisch betätigte Reibbremsen als Radbremsen eingesetzt werden. Gemäß einer alternativen Ausführungsform der Erfindung weist das Fahrzeug einen elektrischen Antrieb auf, und das Bremsmoment an mindestens einem Rad wird zumindest teilweise von der oder den als Generator betriebenen elektrischen Maschine/n erzeugt.

Für die Erfassung von fahrdynamischen Zuständen sind ein Lenkradwinkelsensor 12 zur Messung des Lenkwinkels δ, vier Raddrehzahlsensoren 9a - 9d zur Messung der Drehgeschwindigkeiten **Vᵢ** der einzelnen Räder, ein Querbeschleunigungssensor 5 zur Messung der Querbeschleunigung a_{Lat}, ein Gierratensensor 6 zur Messung der auch als Gierrate bezeichneten Gierwinkelgeschwindigkeit **Ψ̇** und mindestens ein Drucksensor 14 für die Messung des von Bremspedal und THZ erzeugten Bremsdrucks **p** und/oder ein Betätigungswegsensor vorhanden. Die Signale der Radsensoren werden einem elektronischen Steuergerät (ECU) 7 zugeführt, das anhand vorgegebener Kriterien aus den Raddrehgeschwindigkeiten **Vᵢ** die Fahrzeuggeschwindigkeit **v_{Ref}** ermittelt.

Die ECU (das elektronische Steuergerät) 7 empfängt die Daten der oben beschriebenen wie auch eventuell vorhandener weiterer Sensoren und steuert die Hydraulikeinheit (HCU) 8, um fahrerunabhängig einen Aufbau oder eine Modulation des Bremsdrucks in den einzelnen Radbremsen zu ermöglichen. Zusätzlich werden das aktuell von Antriebsmotor 2 erzeugte Antriebsmoment und das vom Fahrer gewünschte Moment bestimmt. Dabei kann es sich auch um indirekt ermittelte Größen handeln, die beispielsweise aus einem Motorkennfeld abgeleitet werden und der ECU 7 über eine Schnittstelle 11, z.B. einen CAN- oder FlexRay-Bus vom nicht gezeigten Motorsteuergerät übertragen werden.

Die ECU 7 führt ein oder mehrere Verfahren zur Regelung der Fahrdynamik aus, wobei eine Arbitrierung gegebenenfalls simultan eintreffender Bremsanforderungen stattfindet. So erfolgt vielfach eine Gierratenregelung, welche die gemessene Gierrate mit einer Modellgierrate vergleicht. Liegt diese Differenz über der Regeleintrittsschwelle beginnt der Bremseneingriff. Die Modellgierrate entspricht der Sollgierrate und wird durch ein einfaches Fahrzeugmodell über den Lenkwinkel und die Fahrzeuggeschwindigkeit gebildet. Daneben findet häufig eine Regelung der Schwimmwinkelgeschwindigkeit statt. Diese Größe wird auch über das Fahrzeugmodell gebildet und entspricht in Übersteuersituationen der Geschwindigkeit mit der das Fahrzeug eindreht bzw. das Fahrzeugheck ausschert. Sobald eine gewisse Schwelle für die Schwimmwinkelgeschwindigkeit überschritten ist, beginnt der Bremseneingriff. Parallel bzw. unterlagert zu oder unabhängig von den Fahrdynamikregelungen finde eine Bremsschlupfregelung statt, welche ein Blockieren der Räder während eines Bremsvorgangs verhindert.

Weiterhin weist das Fahrzeug 1 eine Umfeldsensorik mit zumindest einem Umfeldsensor 15 auf, mit dem Objekte im Umfeld des Fahrzeugs erfasst werden können, bei denen es sich insbesondere um weitere Kraftfahrzeuge handelt, die sich in derselben oder einer benachbarten Fahrspur seitlich und/oder vor dem Fahrzeug 1 bewegen. Als Objekte kommen aber auch statische oder nahezu statische Objekte wie beispielsweise Bäume, Fußgänger oder Fahrbahnbegrenzungen in Frage. Beispielhaft wird ein Umfeldsensor 15 mit einem Erfassungsbereich 17 gezeigt, der einen Raumwinkel vor dem Fahrzeug 1 umfasst, in dem ein Objekt 18 dargestellt ist. Die Signale des Umfeldsensors 15 werden von einem Kontrollrechner 16 ausgewertet und entsprechende Informationen der ECU 7 zur Verfügung gestellt. Prinzipiell kann Kontrollrechner 16 aber auch in dem Umfeldsensor 15 integriert sein, und/oder die ECU 7 kann die Sensorsignale direkt verarbeiten.

Bei dem Umfeldsensor 15 handelt sich z.B. um einen an sich bekannten LIDAR-Sensor (Light Detection and Ranging) der die Abstände d zu den erfassten Punkten eines Objekts sowie die Winkel *ϕ* zwischen den Verbindungsgeraden zu diesen Punkten und der Mittellängsachse des Fahrzeugs misst, wie dies in Fig. 1 beispielhaft für einen Punkt des Objekts 18 veranschaulicht ist. Die dem Fahrzeug 1 zugewandten Fronten der erfassten Objekte setzen sich aus mehreren erfassten Punkten zusammen, zu der die Sensorsignale übermittelt werden, die Korrelationen zwischen Punkten und der Form eines Objekts herstellt und einen Bezugspunkt für das Objekt 18 bestimmt. Als Bezugspunkt kann dabei beispielsweise der Mittelpunkt des Objekts 18 bzw. der Mittelpunkt der erfassten Punkte des Objekts gewählt werden. Falls die Geschwindigkeiten der detektierten Punkte und damit die Geschwindigkeit der erfassten Objekte nicht direkt gemessen werden können, so werden Sie vorzugsweise aus der Differenz zwischen den in aufeinander folgenden Zeitschritten gemessenen Abständen berechnet. In ähnlicher Weise kann grundsätzlich auch die Beschleunigung der Objekte durch zweimaliges Ableiten ihrer Positionen bestimmt werden. Die Geschwindigkeit der Objekte kann z.B. auch mittels des Dopplereffekts bestimmt werden, insbesondere wenn es sich bei dem Umfeldsensor um einen Radarsensor handelt. Prinzipiell können auch eine oder mehrere Kameras bzw. andere Umfeldsensoren eingesetzt werden.

Wie in der Einleitung erläutert, kann manchmal ein Zusammenstoß mit einem Hindernis durch eine Vollbremsung, selbst unter optimaler Ausnutzung des Kraftschlusses, nicht vermieden werden. In solchen Situationen verhindert nur ein Ausweichmanöver, wie ein einfacher oder doppelter Spurwechsel, die Kollision. Allgemein kann der Fahrer in Abhängigkeit von der konkreten Fahrsituation ein Ausweichmanöver gegenüber einer reinen Abbremsung bevorzugen.

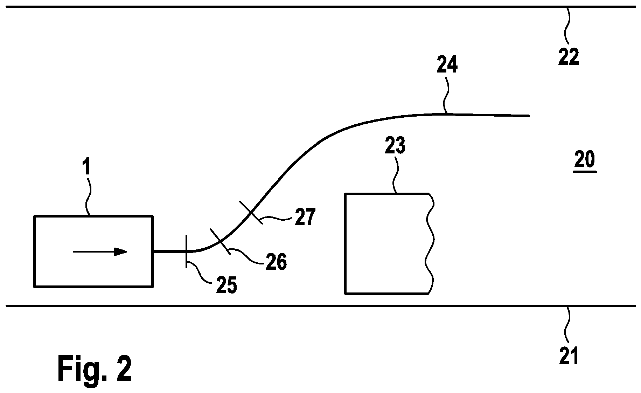

In Figur 2 ist eine schematische Darstellung eines Ausweichvorgangs gezeigt. Das Fahrzeug 1 fährt auf einer Straße 20 mit rechtem Fahrbahnrand 21 und linkem Fahrbahnrand 22 auf ein Hindernis 23, z.B. ein haltendes Fahrzeug zu. Eine entsprechende Situation kann insbesondere auch durch einen Spurwechsel eines vorausfahrenden langsameren Fahrzeugs verursacht worden sein. Um einen Zusammenstoß zu vermeiden, führt der Fahrer beispielsweise einen einfachen Spurwechsel durch, wobei das Fahrzeug der Trajektorie 24 folgt.

Hierbei beginnt der Fahrer an Punkt 25 mit einer Lenkbewegung, die unterstützt wird, indem durch entsprechende Bremseingriffe ein zusätzliches Giermoment in Ausweichrichtung (also dem vom Fahrer eingeschlagenen Lenkwinkel) aufgebaut wird. Im Falle einer Vollbremsung wird zweckmäßigerweise in dem Moment, in dem der Fahrer einlenkt, die Längskraft am kurvenäußeren Vorderrad durch radindividuellen Abbau von Bremsdruck abgesenkt, damit das resultierende Giermoment die Lenkvorgabe des Fahrers unterstützt und das Fahrzeug dieser direkter folgt. Bei einer teilgebremsten Fahrt kann vorteilhafterweise ein Druckaufbau an einem kurveninneren Rad erfolgen.

Dadurch, dass in dieser Phase ein geringer Schlupfschwellenwert der Bremsschlupfregelung eingestellt wird, kann die Ausweichbewegung ohne ungewollten Abbau von Querkraft unterstützt werden. Sobald also erkannt wurde, dass die Kollision durch eine Vollbremsung nicht mehr vermieden werden kann und/oder das Ausweichen durch den geringen Abstand nur mit sehr hoher Lenkdynamik möglich wäre, so wird in der Bremsschlupfregelung die Lenkbarkeit gegenüber dem kürzesten möglichen Bremsweg priorisiert. Eine besonders frühzeitige Erkennung und entsprechende Reaktion reduziert die Dauer der Schlupfeinläufe an den Rädern, womit immer ein Aufbau von Querkräften beim Lenken gewährleistet ist.

Wenn anhand der integrierten Gierrate und des benötigten Querversatzes oder anhand einer ermittelten Ausweichtrajektorie erkannt wird, dass ein geeigneter Ausweichkurs erreicht wurde, ist es vorteilhaft, bereits in Punkt 26 ein Lenken des Fahrers zu dämpfen, insbesondere indem entsprechende Bremseingriffe ein zusätzliches Giermoment entgegen der Ausweichrichtung erzeugen.

Sobald ein Einlenken des Fahrers erkannt wird, was beispielsweise in Punkt 27 der Fall ist, wird ein hoher Schlupfschwellenwert der Bremsschlupfregelung eingestellt. Somit wird verhindert, dass ein übermäßiges Lenken die Fahrstabilität gefährdet und ein Umkippen des Fahrzeugs provoziert. Weiterhin verringert sich der in Querrichtung für das Ausweichmanöver benötigte Platz gegenüber dem eines Übersteuernden Fahrzeugs.

## Patentansprüche

1. Verfahren, bei dem das Fahrverhalten eines Fahrzeugs (1) in Abhängigkeit von Umgebungsdaten beeinflusst wird, um ein Ausweichmanöver zu unterstützen, sobald eine Kollisionsgefahr anhand der Daten von einem oder mehreren Umfeldsensoren (15), insbesondere Radarsensoren und/oder Kameras, und der Daten von einem oder mehreren Fahrzeugsensoren, insbesondere Lenkwinkelsensor (12) und/oder Gierratensensor (6) und/oder Raddrehzahlsensoren (9a-9d), erkannt wird, wobei das Fahrzeug (1) ein elektronisch geregeltes Bremssystem aufweist, welches einen fahrerunabhängigen Aufbau und eine Modulation der Bremskräfte an den einzelnen Rädern des Fahrzeugs ermöglicht, wobei bei erkannter Kollisionsgefahr mittels eines fahrerunabhängigen Bremseingriffs ein Einlenken des Fahrers unterstützt wird, **dadurch gekennzeichnet, dass** ein Bremsschlupf an mindestens einem Rad des Fahrzeugs in einer ersten Phase des Ausweichmanövers auf einen ersten Schlupfschwellenwert begrenzt wird und in einer zweiten Phase des Ausweichmanövers auf einen zweiten Schlupfschwellenwert begrenzt wird, wobei der erste Schlupfschwellenwert kleiner als der zweite Schlupfschwellenwert ist, wobei die zweite Phase dann beginnt, wenn der Fahrer entgegen der Ausweichrichtung lenkt.

2. Verfahren nach Anspruch 1, **dadurch gekennzeichnet, dass** die erste Phase des Ausweichmanövers bei erkannter Kollisionsgefahr beginnt, wobei die erste Phase insbesondere erst nach Erkennung eines Einlenkens des Fahrers beginnt.

3. Verfahren nach Anspruch 1 oder 2, **dadurch gekennzeichnet, dass** die zweite Phase erst dann beginnt, wenn eine gemessene Lenkwinkelgeschwindigkeit und/oder eine gemessene Gierbeschleunigung einen vorgegebenen Schleuderschwellenwert überschreitet.

4. Verfahren nach mindestens einem der vorhergehenden Ansprüche, **dadurch gekennzeichnet, dass** in der ersten Phase ein fahrerunabhängiger Aufbau von Bremskraft an einem oder mehreren kurveninneren Rädern des Fahrzeugs erfolgt, um ein Giermoment in Ausweichrichtung zu erzeugen, wobei zumindest der Bremschlupf an dem Eingriffsrad oder den Eingriffsrädern begrenzt wird.

5. Verfahren nach mindestens einem der vorhergehenden Ansprüche, **dadurch gekennzeichnet, dass** in der zweiten Phase ein fahrerunabhängiger Aufbau von Bremskraft an einem oder mehreren kurvenäußeren Rädern des Fahrzeugs erfolgt, um die Gierbeschleunigung zu begrenzen, wobei zumindest der Bremschlupf an dem Eingriffsrad oder den Eingriffsrädern begrenzt wird.

6. Verfahren nach mindestens einem der vorhergehenden Ansprüche, **dadurch gekennzeichnet, dass** ein fahrerunabhängige Aufbau und/oder Abbau von Bremskraft nach Maßgabe einer Sollgierrate erfolgt, welche insbesondere anhand einer berechneten Ausweichtrajektorie bestimmt wird.

7. Verfahren nach mindestens einem der vorhergehenden Ansprüche, **dadurch gekennzeichnet, dass** der zweite Schlupfschwellenwert nach Maßgabe einer gemessenen Gierbeschleunigung und/oder einer gemessenen Lenkwinkelgeschwindigkeit festgelegt wird.

8. Verfahren nach mindestens einem der vorhergehenden Ansprüche, **dadurch gekennzeichnet, dass** bei erkannter Annäherung an ein Hindernis (18) zunächst ein fahrerunabhängiger Bremseingriff an allen Rädern des Fahrzeugs erfolgt, um die Fahrgeschwindigkeit zu verringern, wobei vorzugsweise eine Kollisionsgefahr erst dann erkannt wird, wenn eine Kollision allein durch Bremsen nicht mehr verhindert werden kann.

9. Verfahren nach Anspruch 8, **dadurch gekennzeichnet, dass** bei erkannter Annäherung an ein Hindernis (18) der Bremsschlupf zumindest an den Rädern der Vorderachse, vorzugsweise an allen Rädern des Fahrzeugs, auf einen dritten Schlupfschwellenwert begrenzt wird, welcher größer als oder gleich wie der zweite Schlupfschwellenwert ist.

10. Elektronisches Steuergerät (7), insbesondere elektronisches Bremsensteuergerät, welches Informationen eines oder mehrerer Umfeldsensoren (15), insbesondere Radarsensoren und/oder Kameras, empfängt und mit einem oder mehreren Fahrzeugsensoren, insbesondere Lenkwinkelsensor (12) und/oder Gierratensensor (6) und/oder Raddrehzahlsensoren (9a-9d), verbunden ist, und welches durch eine Ansteuerung von Aktuatoren (10a-10d) einen fahrerunabhängigen Aufbau und eine Modulation der Bremskräfte an den einzelnen Rädern des Fahrzeugs bewirken kann, **dadurch gekennzeichnet, dass** von dem elektronischen Steuergerät (7) ein Verfahren nach mindestens einem der vorhergehenden Ansprüche durchgeführt wird.

## Claims

1. Method in which the driving behavior of a vehicle (1) is influenced as a function of surroundings data in order to assist an avoidance maneuver as soon as a risk of collision is detected using the data from one or more ambient sensors (15), in particular radar sensors and/or cameras, and the data from one or more vehicle sensors, in particular steering angle sensor (12) and/or yaw rate sensor (6) and/or wheel rotational speed sensors (9a-9d), wherein the vehicle (1) has an electronically controlled brake system which permits a build-up and a modulation of the braking forces at the individual wheels of the vehicle independently of the driver, wherein when a risk of collision is detected, turning in of the driver is assisted by means of a braking intervention which is independent of the driver, **characterized in that** in a first phase of the avoidance maneuver a brake slip at at least one wheel of the vehicle is limited to a first slip threshold value, and in a second phase of the avoidance maneuver it is limited to a second slip threshold value, wherein the first slip threshold value is lower than the second slip threshold value, wherein the second phase starts when the driver steers counter to the avoidance direction.

2. Method according to Claim 1, **characterized in that** the first phase of the avoidance maneuver starts when a risk of collision is detected, wherein the first phase does not start, in particular, until after turning in of the driver is detected.

3. Method according to Claim 1 or 2, **characterized in that** the second phase does not start until a measured steering angle speed and/or a measured yaw acceleration exceeds a predefined skidding threshold value.

4. Method according to at least one of the preceding claims, **characterized in that** in the first phase a build-up of braking force which is independent of the driver takes place at one or more wheels of the vehicle on the inside of the bend, in order to generate a yawing moment in the avoidance direction, wherein at least the brake slip at the intervention wheel or the intervention wheels is limited.

5. Method according to at least one of the preceding claims, **characterized in that** in the second phase a build-up of braking force which is independent of the driver takes place at one or more wheels of the vehicle on the outside of the bend, in order to limit the yaw acceleration, wherein at least the brake slip at the intervention wheel or the intervention wheels is limited.

6. Method according to at least one of the preceding claims, **characterized in that** a build-up and/or reduction of braking force which is independent of the driver takes place in accordance with a set point yaw rate independently of the driver, which set point yaw rate is determined, in particular, on the basis of a calculated avoidance trajectory.

7. Method according to at least one of the preceding claims, **characterized in that** the second slip threshold value is defined in accordance with a measured yaw acceleration and/or a measured steering angle speed.

8. Method according to at least one of the preceding claims, **characterized in that** when it is detected that the vehicle is approaching an obstacle (18), at first a braking intervention which is independent of the driver takes place at all the wheels of the vehicle in order to reduce the velocity, wherein a risk of collision is preferably not detected until a collision can no longer be prevented solely by braking.

9. Method according to Claim 8, **characterized in that** when it is detected that the vehicle is approaching an obstacle (18), the brake slip at at least the wheels of the front axle, preferably at all the wheels of the vehicle, is limited to a third slip threshold value which is higher than or equal to the second slip threshold value.

10. Electronic control device (7), in particular electronic brake control device, which receives information from one or more ambient sensors (15), in particular radar sensors and/or cameras, and is connected to one or more vehicle sensors, in particular steering angle sensor (12) and/or yaw rate sensor (6) and/or wheel rotational speed sensors (9a-9d), and which can bring about a build-up and a modulation of the braking forces at the individual wheels of the vehicle independently of the driver by activating actuators (10a-10d), **characterized in that** a method according to at least one of the preceding claims is carried out by the electronic control device (7).

## Revendications

1. Procédé dans lequel l'influence exercée sur le comportement de roulement d'un véhicule (1) dépend de données de voisinage pour assister une manœuvre d'évitement dès qu'un risque de collision est détecté sur la base des données provenant d'au moins un capteur d'environnement (15), en particulier de capteurs radar et/ou de caméras, et de données provenant d'au moins un capteur de véhicule, en particulier d'un capteur d'angle de direction (12) et/ou d'un capteur de taux de lacet (6) et/ou de capteurs de vitesse de rotation de roue (9a à 9d), le véhicule (1) comportant un système de freinage à commande électronique qui permet l'application, indépendamment du conducteur, et la modulation des forces de freinage sur les roues individuelles du véhicule, une intervention du conducteur dans la direction étant assistée, lorsqu'un risque de collision est détecté, par une intervention de freinage indépendante du conducteur, **caractérisé en ce qu'**un glissement au freinage au niveau d'au moins une roue du véhicule est limité à un premier seuil de glissement dans une première phase de la manœuvre d'évitement et est limité à un deuxième seuil de glissement dans une deuxième phase de la manœuvre d'évitement, le premier seuil de glissement étant inférieur au deuxième seuil de glissement, la deuxième phase ne commençant que lorsque le conducteur se dirige dans la direction opposée à la direction d'évitement.

2. Procédé selon la revendication 1, **caractérisé en ce que** la première phase de la manœuvre d'évitement commence lorsque le risque de collision est détecté, la première phase ne commençant notamment qu'après détection d'une intervention du conducteur dans la direction.

3. Procédé selon la revendication 1 ou 2, **caractérisé en ce que** la deuxième phase ne commence que lorsqu'une vitesse angulaire de direction mesurée et/ou une accélération de lacet mesurée devient supérieure à un seuil de dérapage prédéterminé.

4. Procédé selon l'une au moins des revendications précédentes, **caractérisé en ce que**, dans la première phase, une force de freinage est appliquée, indépendamment du conducteur, sur au moins une roue, intérieure au virage, du véhicule afin de générer un moment de lacet dans la direction d'évitement, au moins le glissement au freinage étant limité à la roue d'engagement ou aux roues d'engagement.

5. Procédé selon l'une au moins des revendications précédentes, **caractérisé en ce que**, dans la deuxième phase, une force de freinage est appliquée, indépendamment du conducteur, sur au moins une roue, extérieure au virage, du véhicule afin de limiter l'accélération de lacet, au moins le glissement au freinage étant limité à la roue d'engagement ou aux roues d'engagement.

6. Procédé selon l'une au moins des revendications précédentes, **caractérisé en ce qu'**une force de freinage est appliquée et/ou supprimée, indépendamment du conducteur, conformément à un taux de lacet de consigne qui est déterminé notamment sur la base d'une trajectoire d'évitement calculée.

7. Procédé selon l'une au moins des revendications précédentes, **caractérisé en ce que** le deuxième seuil de glissement est déterminé conformément à une accélération angulaire de direction mesurée et/ou une vitesse angulaire de direction mesurée.

8. Procédé selon l'une au moins des revendications précédentes, **caractérisé en ce que**, lorsque l'approche d'un obstacle (18) est détectée, une intervention de freinage sur toutes les roues du véhicule est effectuée indépendamment du conducteur afin de réduire la vitesse du véhicule, un risque de collision n'étant de préférence détecté que lorsqu'une collision ne peut plus être évitée seulement par un freinage.

9. Procédé selon la revendication 8, **caractérisé en ce que**, lorsqu'une approche d'un obstacle (18) est détectée, le glissement au freinage, au moins au niveau des roues de l'essieu avant, de préférence au niveau de toutes les roues du véhicule, est limité à un troisième seuil de glissement supérieur ou égal au deuxième seuil de glissement.

10. Unité de commande électronique (7), en particulier une unité de commande de frein électronique, laquelle reçoit des informations sur au moins un capteur d'environnement (15), notamment des capteurs radar et/ou des caméras, et est reliée à au moins un capteur de véhicule, notamment un capteur d'angle de direction (12) et/ou un capteur de taux de lacet (6) et/ou des capteurs de vitesse de rotation de roue (9a à 9d) et qui, par commande des actionneurs (10a à 10d) peut entraîner l'application, indépendamment du conducteur, et la modulation des forces de freinage sur les roues individuelles du véhicule, **caractérisée en ce que** l'unité de commande électronique (7) met en œuvre un procédé selon l'une au moins des revendications précédentes.
